(19) **Europäisches Patentamt / European Patent Office / Office européen des brevets**

(11) **EP 2 092 696 B1**

(12) # EUROPEAN PATENT SPECIFICATION

(45) Date of publication and mention
of the grant of the patent:
**15.09.2010 Bulletin 2010/37**

(21) Application number: **07847166.1**

(22) Date of filing: **14.11.2007**

(51) Int Cl.:
***H04L 12/56*** *(2006.01)*

(86) International application number:
**PCT/EP2007/062342**

(87) International publication number:
**WO 2008/058998 (22.05.2008 Gazette 2008/21)**

(54) **RESERVATION AND ADMISSION OF ACCESS RESOURCES FOR ACCESS SELECTION IN MULTI-ACCESS NETWORKS**

RESERVIERUNG UND ZUGANGSBERECHTIGUNG FÜR RESSOURCEN ZUR ZUGANGSAUSWAHL IN MEHRFACHZUGANGSNETZEN

RÉSERVATION ET ADMISSION DE RESSOURCES D'ACCÈS POUR UNE SÉLECTION D'ACCÈS DANS DES RÉSEAUX À MULTIPLES ACCÈS

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **15.11.2006 PCT/EP2006/068529**

(43) Date of publication of application:
**26.08.2009 Bulletin 2009/35**

(73) Proprietor: **Telefonaktiebolaget LM Ericsson (publ)
164 83 Stockholm (SE)**

(72) Inventors:
• **SACHS, Joachim
52066 Aachen (DE)**
• **RINTA-AHO, Teemu
02360 Espoo (FI)**
• **MAGNUSSON, Per
587 23 Linköping (SE)**
• **PRYTZ, Mikael
144 63 Rönninge (SE)**

(74) Representative: **Pfeifer, Torsten et al
Ericsson GmbH
Patent Department
Ericsson Allee 1
52134 Herzogenrath (DE)**

(56) References cited:
**WO-A-2005/060294      WO-A-2006/028409**

• **GERBERT ET AL: "D 2.4 Multi-Radio Access Architecture" FRAMEWORK PROGRAMME, AMBIENT NETWORKS, XX, XX, 22 December 2005 (2005-12-22), XP003001810**
• **"Digital cellular telecommunications system (Phase 2+); Universal Mobile Telecommunications System (UMTS); End-to-end Quality of Service (QoS) concept and architecture (3GPP TS 23.207 version 6.6.0 Release 6); ETSI TS 123 207" ETSI STANDARDS, EUROPEAN TELECOMMUNICATIONS STANDARDS INSTITUTE, SOPHIA-ANTIPO, FR, vol. 3-SA2, no. V660, September 2005 (2005-09), XP014032462 ISSN: 0000-0001**

## Description

### CLAIMING BENEFIT OF PRIOR FILED PCT APPLICATION

This application claims the benefit of PCT Patent Application No. PCT/EP2006/068529 which was filed on November 15, 2006.

### TECHNICAL FIELD

The present invention relates to methods, devices and computer programs that optimize access in a multi-access communications network environment.

### BACKGROUND

The following terms and abbreviation are herewith defined, at least some of which are referred to within the following description of the background and the present invention.

| | |
|---|---|
| AAA | Authentication, Authorization and Accounting |
| AN | Ambient Network |
| ARM | Access Resource Manager |
| AS | Active Set |
| CDMA | Code-Division Multiple Access |
| CS | Candidate Set |
| DS | Detected Set |
| E-UTRAN | Evolved UMTS Terrestrial Radio Access Network |
| GERAN | GSM EDGE Radio Access Network |
| GLL | Generic Link Layer |
| GSM | Global System for Mobile Communications |
| HSPA | High-Speed Packet Access |
| LTE | Long Term Evolution (for 3G) |
| MRM | Multi-Resource Management |
| MRRM | Multi-Radio Resource Management |
| RNC | Radio Network Controller |
| RRM | Radio Resource Management |
| UMTS | Universal Mobile Telecommunications System |
| UTRAN | UMTS Terrestrial Radio Access Network |
| VS | Validated Set |
| xDSL | x Digital Subscriber Line |
| UN | User Network |
| WLAN | Wireless Local Area Network |

Ambient Networks (AN) is an integrated project that is sponsored by the European Union's 6th Framework Programme (see http://www.ambient-networks.org). The AN project has a goal of providing scalable and affordable wireless networking in an environment which is populated by a multitude of user devices, wireless technologies, network operators and business actors. For instance, the AN project has a goal of enabling a user network to use one or more access systems to connect to a remote communications network. One way that this goal can be satisfied and also be applied to existing communication systems is the subject of the present invention.

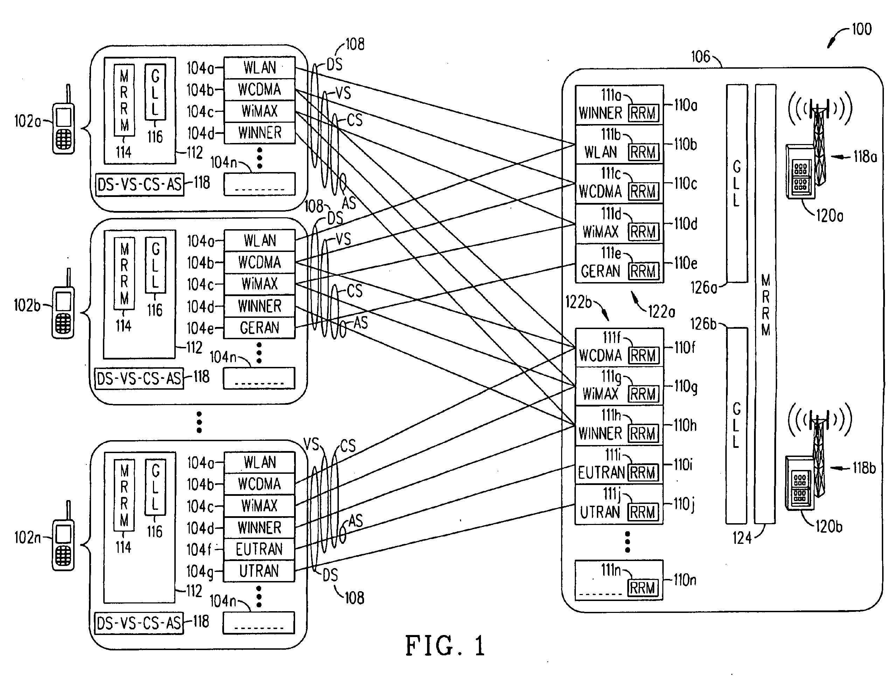

Referring to FIGURE 1, there is shown a block diagram of an exemplary communication system 100 within which there are multiple user networks 102a, 102b...102n each of which utilize one more access systems 104a, 104b... 104n to connect to a remote communications network 106. Each user network 102a, 102b... 102n is shown to be a single device, e.g. a user terminal like a mobile phone or a computer, with access capability provided by one reconfigurable access system or multiple access systems 104a, 104b...104n. Alternatively, the user networks 102a, 102b...102n can be an interconnection of multiple nodes, like for example a personal area network or a moving network within a vehicle, where the access capabilities are provided by the different nodes. The access systems 104a, 104b...104n can be either a wireless access system such as GSM, UMTS, UTRAN, E-UTRAN, GERAN, HSPA, LTE, WiMAX, WLAN, Bluetooth, etc... and/or a fixed access system such as Ethernet, CableModem, xDSL, fiber, etc.... The availability and capabilities of the individual access systems 104a, 104b...104n can vary over time, e.g. due to movement of the user network 102a, 102b...102n, changes in the load of the access systems 104a, 104b...104n, etc.

As shown, each user network 102a, 102b...102n has many different types of possible access connections 108 which can exist with multiple access systems 110a, 110b...110n that are associated with the remote communication network 106 (or multiple remote communications networks 106 where some access connections 108 belong to one remote communication network 106 and other access connections 108 belong to other remote communication networks 106). Each user network 102a, 102b...102n needs to be able to select one or more of these possible access connections 108 to establish one or more communication sessions with the remote communications network 106 (or multiple remote communications networks 106). In accordance with the AN project, each user network 102a, 102b...102n has a processor 112 that uses a MRRM entity 114 and a GLL entity 116 (or multiple GLL entities which correspond with the multiple access systems) to perform this access selection and to help establish the communication session(s) with the remote communications network 106 (or multiple remote communications networks 106). To accomplish this, each MRRM entity 114 maintains a number of different access sets (which are stored in memory 118) that have been classified as follows:

- Detected Set (DS): is the set of possible access connections 108 that are detected by the respective user network 102a, 102b...102n.

- Validated Set (VS): is the set of detected access connections that have been validated by policy functions.

- Candidate Set (CS): is the set of suitable access connections 108 selected from the validated set that can be used for a particular data bearer to the remote communications network 106.

- Active Set (AS): is the set of access connections 108 selected from the candidate set which are used for a particular data bearer that has been established with the remote communications network 106. In the examples hereinafter, the AS contains one access connection 108 which is currently being used as a data bearer to the remote communications network 106.

Note 1: The AS can be further divided into MRRM AS and GLL AS however this separation is not relevant to the present discussion.

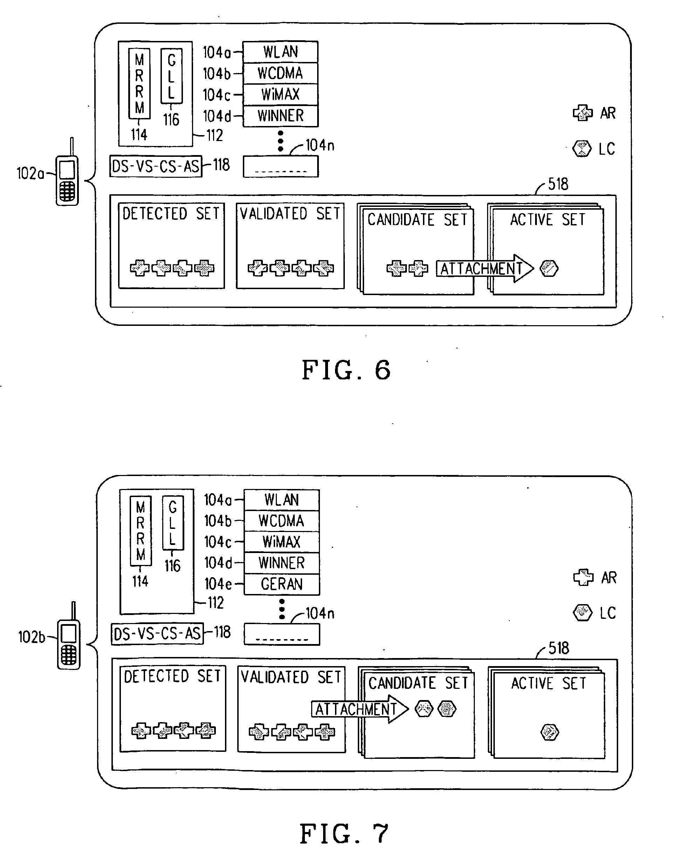

Note 2: Each user network 102a, 102b...102n has one DS and one VS, but they can be multiple CSs and ASs (indicated by $CS_i$ and $AS_i$ when appropriate) because a single CS and a single AS exists for every data bearer, which can transport either user or control data. For instance, a first CS and AS may exist for a speech transmission which requires a low bandwidth while a second CS and AS may be exist for a video stream which requires a high bandwidth. Typically $\boldsymbol{DS \supseteq VS \supseteq CS_i \supseteq AS_i}$ although this definition is not strictly true in the mathematical sense: a DS contains "possible access connections" (or access resources), the AS contains "access connections", and the VS/CS can contain either one or the other (the difference between access resources and access connections is discussed in detail below with respect to FIGURES 6-8).

Note 3: The exemplary remote communications network 106 shown includes two separate nodes 118a and 118b each of which has a base station/radio access controller 120a and 120b. In addition, the exemplary remote communications network 106 includes a single MRRM entity 124 and two GLL entities 126a and 126b. If desired, the MRRM entity 124 could be co-located within one of the access systems 110a, 110b... 110n. Each access system 110a, 110b... 110n is shown to have a RRM 111a, 111b...111n the function of which is to manage access resources as will be discussed later in this document. If desired, the MRRM entity 124 could be located in a core network such as for example an evolved packet core that is standardized in 3GPP mobile packet telecommunications networks. Plus, the GLL entities 126a and 126b could each be divided into multiple GLL entities with one GLL entity for each access system 110a, 110b... 110n.

Note 4: A detailed discussion about the AN project is provided in the following documents:

  o Ambient Networks, "Multi-Radio Access Architecture", Project Deliverable D2-4, December 2005.
  o Ambient Networks, "Multi-Radio Access Architecture", Project Deliverable D2-2, January 2005.
  o Ambient Networks, "Ambient Network Security", Project Deliverable D7-2, December 2005, (also Annex II of the deliverable).

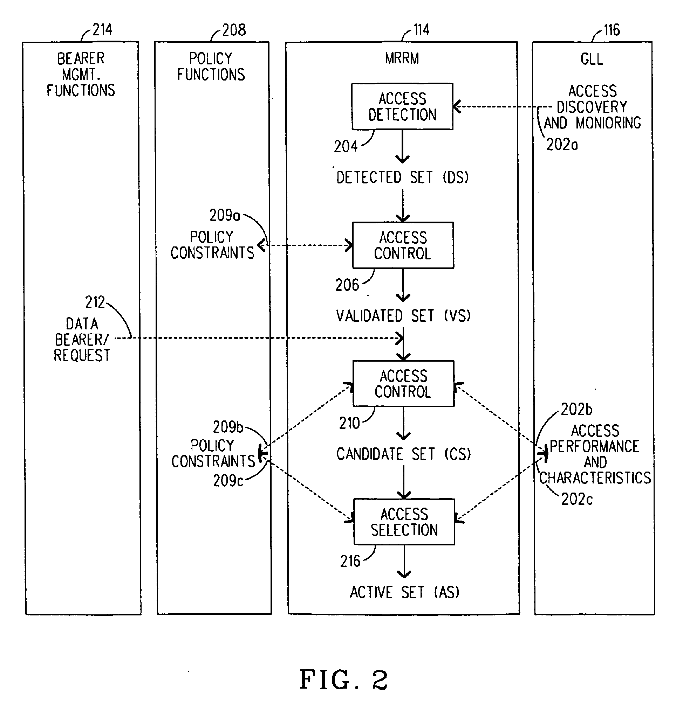

Each user network 102a, 102b... 102n and in particular their respective MRRM entity 114 and GLL entity 116 function to determine and maintain the possible access connection(s) 108 which can be used to establish the communication session (s) with the remote communications network 106 (or multiple remote communications networks 106). Basically, each GLL entity 116 functions to monitor and observe the availability, capabilities and characteristics of each possible access connections 108 with the remote communications network 106 (or multiple remote communications networks 106). Then, the corresponding MRRM entity 114 uses this information to determine/validate which of the possible access connections 108 are to be admitted into the DS (in this example it is assumed that all of the possible access connections 108 are added to the DS). Thereafter, the MRRM entity 114 uses policy functions (e.g., security functions, compensation functions, local policies, remote policies) to determine which of the possible access connections 108 within the DS are to be admitted into the VS. Next, the MRRM entity 114 upon receiving a bearer request determines which of the possible access connections 108 within the VS are to be admitted into the CS. Lastly, the MRRM entity 114 determines which of the possible access connections 108 within the CS are to be placed in the AS and used as data bearer (s) for the communication session(s) with the remote communications network 106. A more detailed discussion about this process is provided next with respect to FIGURE 2.

Referring to FIGURE 2, there is illustrated a diagram which is used to help explain how one user network 102a (for example) and in particular their MRRM entity 114 and GLL entity 116 is able to determine and maintain the possible access connection (s) 108 which can be used to establish the communication session (s) with the remote communications network 106 (or multiple remote communications networks 106). Basically, the GLL entity 116 functions to monitor and observe the availability, capabilities and characteristics of each of the possible access connections 108 with the remote communications network 106 (or multiple remote communications networks 106). For instance, the GLL entity 116 can conduct quality measurements on the possible access connections 108 by measuring the field strength of a beacon signal and/or by measuring the possible bandwidth/access load based on broadcast information. Then, the GLL entity 116 reports this information to the MRRM entity 114 (see dashed lines indicated by numerals 202a, 202b and 202c). Further, this information does not need to be retrieved from the broadcast information but instead it could be obtained from dedicated messages (e.g., after network attachment (discussed below) or via an already attached access). Alternatively, the MRRM entity 114 can obtain information/parameters which are signaled from other entities, like e.g., the MRRM entity 124 within the remote network 106.

As shown, the MRRM entity 114 has an access detection function 204 which uses access discovery/monitoring information 202a (received from the GLL entity 116) to determine which of the possible access connections 108 are to be admitted into the DS (in this example it is assumed that all of the possible access connections 108 are added to the DS) . The MRRM entity 114 also has a first access control function 206 that determines which of the possible access connections 108 in the DS are to be added to the VS. In particular, the MRRM entity 114 implements the first access control function 206 which interacts with a policy function 208 (associated with processor 112) to obtain policy constraints 209a (e.g., security functions, compensation functions, local policies) and then uses this policy information 209a to determine/validate which of the possible access connections 508 from the DS are to be admitted within the VS.

In addition, the MRRM entity 114 has a second access control function 210 which upon receiving a data bearer request 212 which defines the service requirements from a bearer management function 214 (associated with processor 112) functions to interact with the policy function 208 to obtain policy constraints 209b and then uses this information along with the access performance/characteristics information 202b (received from the GLL entity 116) to determine which of the possible access connections 108 within the VS are to be admitted into the CS. In other words, the MRRM entity 114 implements the second access control function 210 and determines which of the possible access connections 108 within the VS could be placed within the CS and then possibly used as communication bearer(s) with the remote communications network 106. Alternatively, this procedure can be triggered by other events besides receiving the data bearer request 212 like, for instance, this procedure could be triggered when the GLL 116 detects a new AR 108 or when there is a change in the performance/characteristics of the monitored ARs 108. This process is performed for each communications session (e.g., data session) which means that there can be multiple CSs. And, the access connections 108 which are placed within anyone of the CSs depends on the requirements of the particular data bearer (e.g., the quality of service, required security, acceptable amount of costs etc...) and to what extent these requirements can be satisfied by the access systems 104a, 104b...104n. Also, the policy constraints 209b can dictate or restrict which of the access connections 108 can be admitted to the CSs.

Furthermore, the MRRM entity 114 has an access selection function 216 which interacts with the policy function 208 to obtain policy constraints 209c and then uses this information along with the access performance/characteristics information 202c (received from the GLL entity 116) to determine which of the possible access connections 108 within the CS are to be used as data bearer(s) for the communication session(s) with the remote communications network 106 (note: anyone of the policy constraints 209a, 209b and 209c could alternatively be e.g., pushed or transmitted from any one of the access networks 110a, 110b...110n). In other words, the MRRM entity 114 implements the access selection function 216 to determine which one of the possible access connections 108 in the CS is to be placed in the AS and actually used as a communication bearer in a communication session that is established with the remote communications network 106. Typically, the access connection 108 which is best suited to be used for a particular communication session (e.g., data bearer) is selected from the CS to be placed within the AS. There are different types of access selection algorithms which can be used for this selection, e.g. an algorithm which chooses the particular access connection 108 that best matches the data session requirements, an algorithm which chooses the particular access connection 108 which has resources that are used most efficiently, an algorithm which chooses the particular access connection 108 based on transmission costs, or various combinations of such strategies. More generally, this AS selection can be seen as an optimization with respect to a certain cost or utility function.

In each of the access systems 104a, 104b...104n, the basic connectivity element that is associated with the possible access connection(s) 108 is called an access resource (AR). An AR is a resource which could be used for establishing connectivity and transmitting data (note: the RRMs 111a, 111b...111n manage the ARs). Examples of an AR include frequency bands/sub carriers, time slots, CDMA codes, transmit power, interference headroom and connection identifiers. An AR can be identified by an AR identity which can be composed of the id of the resource owner such as the network id and a resource specific id such as a cell id in a wireless access system. For instance, the AR identity could be {network id; access type; resource id}. In addition, the AR can be further characterized by AR-related information/AR-descriptor, such as total/occupied/available resources, resource costs, efficiency of the resource usage like a signal-to-noise-and-interference ratio. Basically, the AR corresponds to the underlying physical resources which are associated with the specific access system, e.g. for a UMTS cell it may correspond to available power, a certain number of codes, etc...

The other connectivity element in the access systems 104a, 104b...104n is the logical connection (LC) (also known as access flow (AF)). The access system 104a, 104b...104n establishes the LC with the other access system 110a, 110b...110n based on the corresponding access resource. For the establishment of a LC, identifiers (sometimes called locators) for that LC are created in the terminating access systems 104a, 104b...104n and 110a, 110b...110n. The setup of the LC can include: (1) reserving radio resources for the LC; (2) performing AAA procedures; (3) establishing LC security associations; and (4) negotiating LC usage policies. Basically, the AR provides the capability to establish the connectivity and the LC is the data bearer on which data could be transmitted.

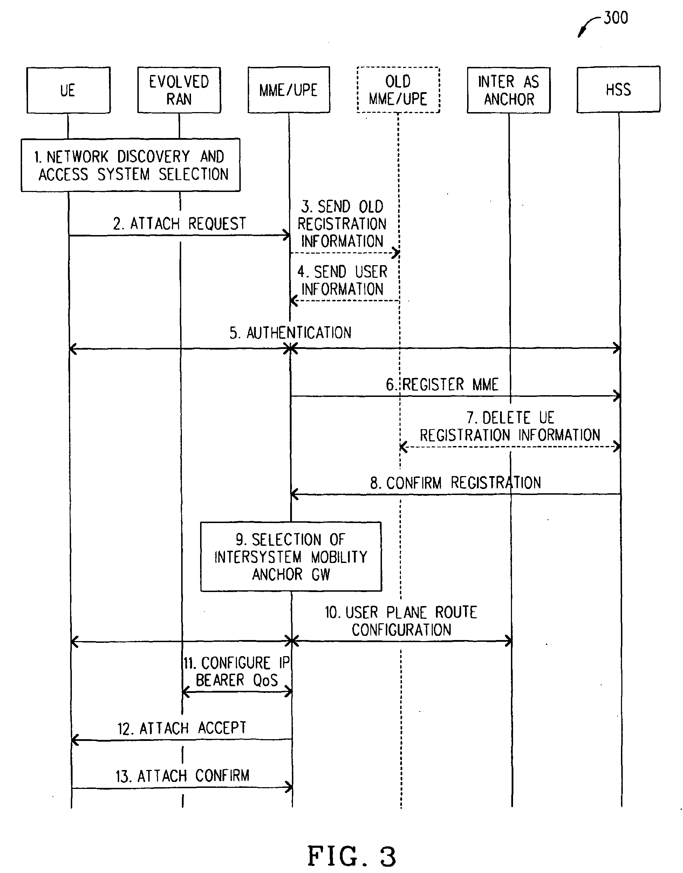

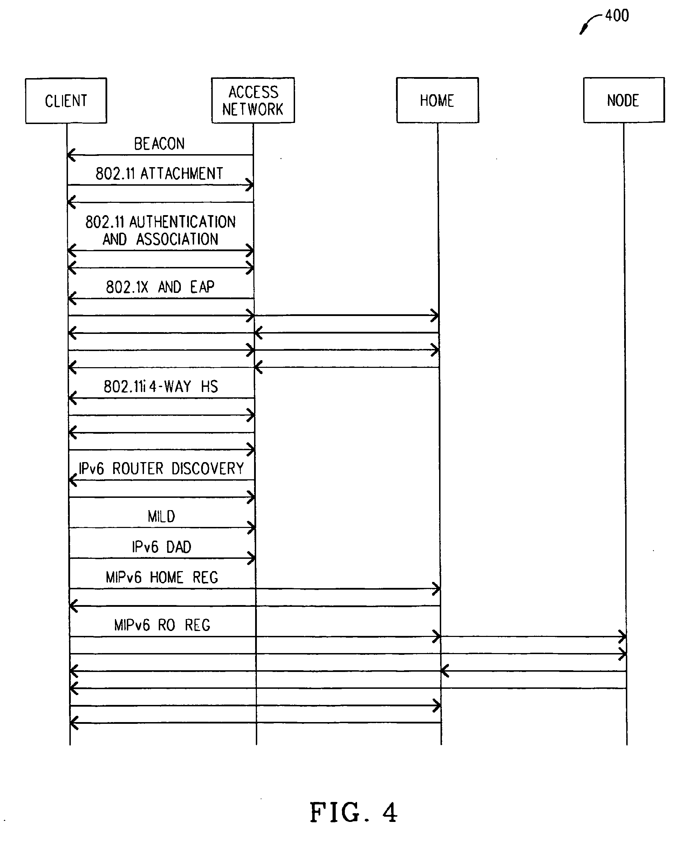

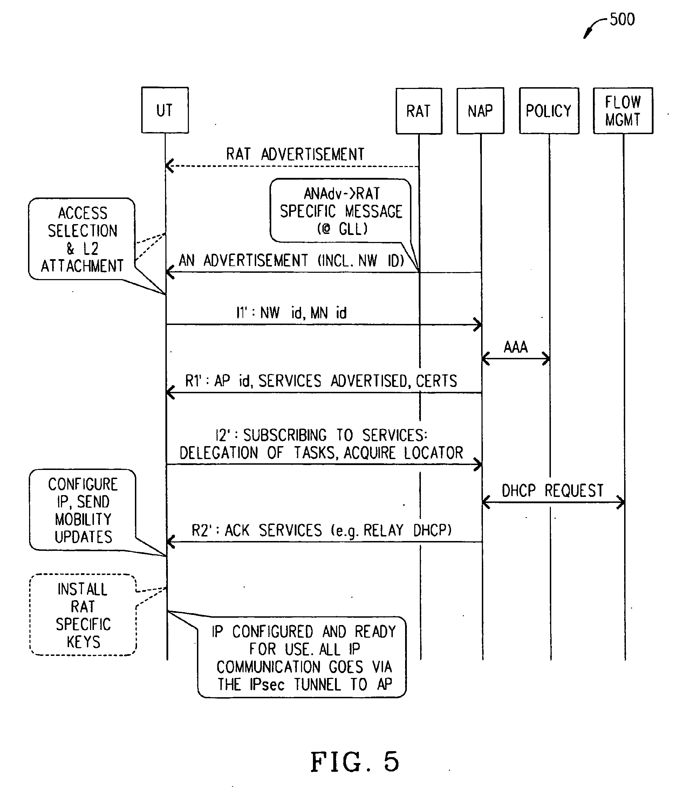

The establishment of a LC (based on access resources) is referred to as network attachment. FIGURES 3-5 illustrate three exemplary signal flow diagrams 300, 400 and 500 which are provided to indicate that there is a lot of signaling associated with establishing a network attachment. In FIGURE 3, the signal flow diagram 300 shows an example of an attachment of a device to a cellular access system (e.g., the 3GPP LTE system described in 3GPP TR 23.882 V. 1.2.3 (June 2006)). In FIGURE 4, the signal flow diagram 400 shows an example of an attachment of a device to a WLAN network (the signaling shown includes link attachment, authentication, authorization, establishment of a security association for encryption and integrity protection, and IP address assignment). In FIGURE 5, the signal flow diagram 500 shows an improved network attachment procedure which was developed by the AN project to help enable seamless connections between systems like the ones shown in FIGURES 3 and 4. These signal flow diagrams 300, 400 and 500 are well known to those skilled in the art and have only been provided herein to indicate that it takes a lot of time and resources to change an AR into a LC.

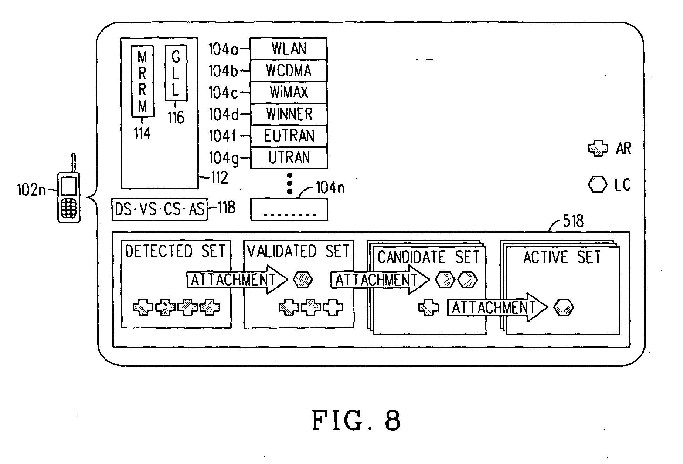

The user networks 102a, 102b...102n have different levels of connectivity that are established in the different phases DS-VS-CS-AS of access selection and as a consequence the types of elements managed within the DS, VS, CS and AS can vary as discussed next with respect to FIGURES 6-8. FIGURE 6 shows a user network 102a (for example) that currently has a DS, VS and CS that contain ARs and an AS that contains a LC. In FIGURE 7 there is a user network 102b (for example) shown which has a DS and VS that contains ARs and a CS and AS that contains LCs. While, FIGURE 8 shows a user network 102n (for example) that currently has a DS which contains ARs, a VS and CS that contains ARs and LCs, and an AS which contains a LC. The pros and cons of these different scenarios are described in the aforementioned PCT Patent Application No. PCT/EP2006/068529 (note: the VS was not discussed in this document however many of the pros and cons of the different scenarios are still relevant).

Unfortunately, there is a problem in the foregoing state of art which concerns the ARs contained within the VS or CS of the various user networks 102a, 102b...102n. Basically, the user networks 102a, 102b...102n can all monitor the same AR and have it included in their VS and CS which means that this particular AR can be considered and evaluated for access selection by multiple user networks 102a, 102b...102n. This situation can be problematic because a large number of these user networks 102a, 102b...102n may try to access the AR in a short time period which may lead to an overload of the AR, a failure of the connection establishment, or a failure of the access selection procedure. Thus, there is a need to address this problem and this need and other needs are satisfied by the present invention.

## SUMMARY

In one aspect, the present invention provides a multi-resource management entity which implements a method comprising the steps of: (a) obtaining information about a potentially required access resource of one access network; (b) determining that more than a certain number of a user networks may potentially use the access resource to establish a connection with the one access network; (c) obtaining information indicating an availability of the access resource; and (d) limiting a number of the user networks that may potentially access the access resource in view of the obtained availability information. The limiting of the number of user networks that may potentially access the access resource is a marked-improvement over the state of art where a large number of the user networks could try to access the same access resource in a short time period which may lead to an overload of the access resource, a failure of the connection establishment, or a failure of the access selection procedure.

In another aspect, the present invention provides an access resource managing entity which implements a method comprising the steps of: (a) obtaining information from a multi-resource managing entity where the information is related to a potentially required access resource that may be used by one or more user networks; (b) checking the availability of the potentially required access resource; (c) sending a report containing availability information back to the multi-resource managing entity. The multi-resource managing entity upon receiving the report is now able to limit the number of the user networks that may potentially access the access resource. The limiting of the number of user networks that may potentially access the access resource is a marked-improvement over the state of art where a large number of the user networks could try to access the same access resource in a short time period which may lead to an overload of the access resource, a failure of the connection establishment, or a failure of the access selection procedure.

Additional aspects of the invention will be set forth, in part, in the detailed description, figures and any claims which follow, and in part will be derived from the detailed description, or can be learned by practice of the invention. It is to be understood that both the foregoing general description and the following detailed description are exemplary and explanatory only and are not restrictive of the invention as disclosed.

## BRIEF DESCRIPTION OF THE DRAWINGS

A more complete understanding of the present invention may be obtained by reference to the following detailed description when taken in conjunction with the accompanying drawings wherein:

FIGURE 1 is a block diagram of a communication system which is used to help explain how user networks with one more access systems can establish communication session(s) with a remote communications network (or multiple remote communications networks);

FIGURE 2 is a diagram which is used to help explain how a user network (in particular an MRRM entity and a GLL entity) determines and maintains possible access connection(s) which can be used to establish the communication session (s) with the remote communications network(s)

FIGURES 3-5 are three exemplary signal flow diagrams which are provided to indicate that it takes a lot of signaling to establish a network attachment (logical connection) between a user network and a remote communications network;

FIGURE 6 is a diagram which is used to show that the user network can maintain a VS set and CS set which contains only ARs for the possible access connections to the remote communications network(s);

FIGURE 7 is a diagram which is used to show that the user network can maintain a VS set which contains only ARs while the CS set contains only LCs for the possible access connections to the remote communications network(s);

FIGURE 8 is a diagram which is used to show that the user network can maintain a VS set and a CS set that can contain either ARs or LCs for the possible access connections to the remote communications network(s);

FIGURE 9 is a block diagram of an exemplary communication system which is used to help explain how user networks with one or more access systems can establish communication session(s) with remote communications network(s) in accordance with the present invention;

FIGURE 10A is a signal flow diagram which is used to help explain the steps of a method for optimizing access in a multi-access network environment in accordance with a first embodiment of the present invention;

FIGURE 10B is a signal flow diagram which is used to help explain the steps of a method for optimizing access in a multi-access network environment in accordance with a second embodiment of the present invention;

FIGURES 11A-11C are several diagrams of an exemplary MRRM and an exemplary ARM associated with a remote communication network which are used to help explain another method for optimizing access in a multi-access network environment in accordance with a third embodiment of the present invention; and

FIGURES 12A-12C are several diagrams of an exemplary MRRM and an exemplary ARM associated with a remote communication network which are used to help explain one way that different components can be incorporated therein to implement the method discussed with respect to FIGURES 11A-11C in accordance with the present invention.

## DETAILED DESCRIPTION

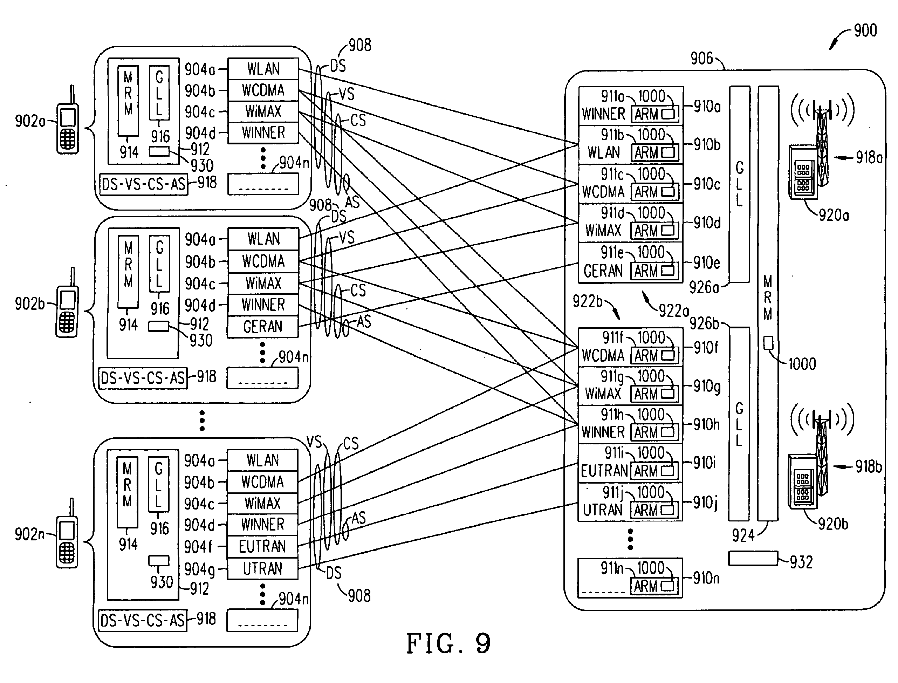

Referring to FIGURE 9, there is shown a block diagram of an exemplary communication system 900 within which there are multiple user networks 902a, 902b...902n each of which utilize one more access systems 904a, 904b... 904n to connect to one or more remote communication networks 906 in accordance with the present invention. The communication system 900 has basically the same components and basically the same functionality as the communication system 100 except that the remote communication network 906 and in particular the MRM entity 924 and ARMs 911a, 911b...911n located therein implement a method 1000 to solve the aforementioned problem where too many user networks 902a, 902b...902n can monitor and try to access the same AR a short time period which could lead to an overload of the AR, a failure of the connection establishment, or a failure of the access selection procedure (note: the ARMs 911a, 911b... 911n could also be referred to as RRMs and the MRM entities 914 and 924 could also be referred to as MRRM entities 914 and 924 since this is a wireless access example). Basically, the MRM entity 924 upon implementing method 1000 would keep a list of ARs which are used in the VSs and/or CSs of different user networks 902a, 902b...902n. If a specific AR is in more than a certain number of VSs/CSs in the user networks 902a, 902b...902n, then the MRM entity 924 interacts with the corresponding ARM 911b (for example) which manages that particular AR to ask if sufficient resources of the AR are available to be used by this many user networks 902a, 902b...902n. If no, then the MRM entity 924 limits the number of user networks 902a, 902b...902n that may include that particular AR in their VSs/CSs. A detailed description is provided next about several different exemplary embodiments of method 1000.

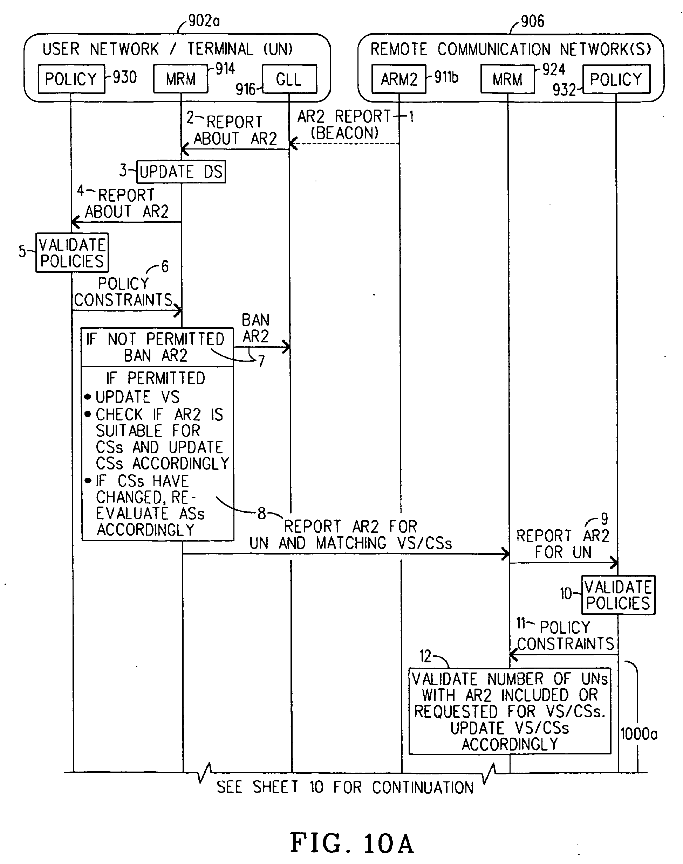

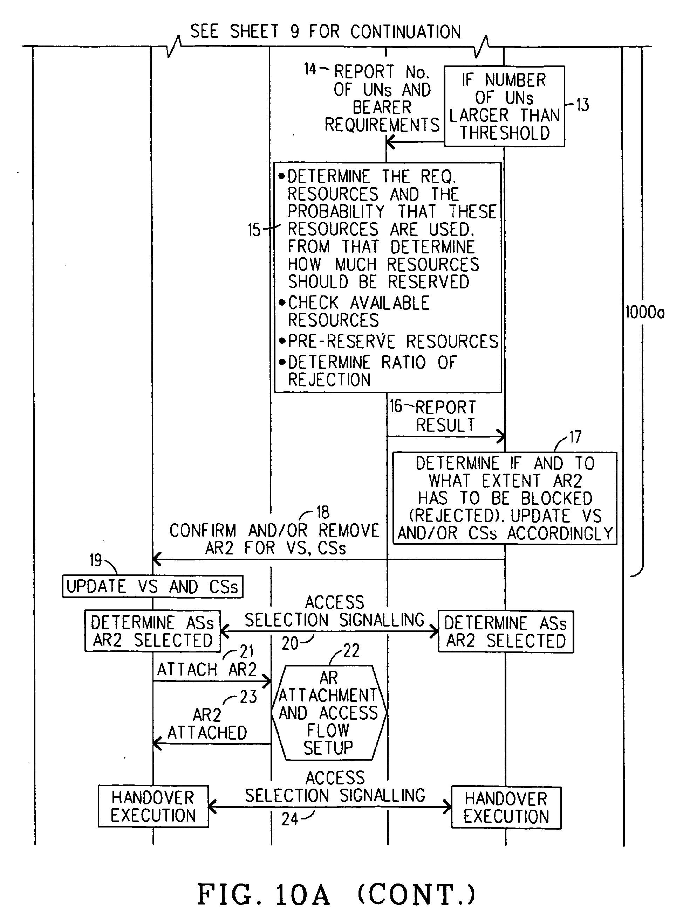

Referring to FIGURE 10A, there is a signal flow diagram which is used to help explain the steps of a method 1000a for optimizing access in a multi-access network environment in accordance with a first embodiment of the present invention. The signal flow diagram has the following steps:

1. The ARM 911b (for example) within the remote communications network 906 sends an AR2 report (access resource report) to the GLL entity 916 located within the user network 902a (in this case a mobile terminal 902a).

2. The GLL entity 916 forwards the AR2 report to the MRM entity 914 located within the user network 902a.

3. The MRM entity 914 updates the DS set.

4. The MRM entity 914 sends an AR2 report to the policy function 930 located within the user network 902a.

5-6. The policy function 930 accesses the appropriate validate policies and forwards the policy constraints to the MRM entity 914.

7-8. The MRM entity 914 based on the received policy constraints can ban the AR2 and send a ban AR2 signal to the GLL entity 916 (see step 7). Or, the MRM entity 914 based on the received policy constrains can permit the AR2. In this case, the MRM entity 914 performs the following: (a) update VS; (b) check if AR2 is suitable for CSs and update CSs accordingly; and (c) if CSs have changed, re-evaluate ASs accordingly. Then, the MRM entity 914 sends an AR2 report and matching VSs/CSs to the MRM entity 924 located within the remote communications network 906 (see step 8).

9. The MRM entity 924 forwards the received AR2 report to a policy function 932 within the remote communications network 906.

10-11. The policy function 932 accesses the validate policies and forwards the policy constraints to the MRM entity 924.

12. The MRM entity 924 validates the number of user networks 902a, 902b...902n with AR2 included or requested to be included within the VSs/CSs and updates the VSs/CSs accordingly.

13-14. The MRM entity 924 determines if the number of user networks 902a, 902b...902n with AR2 included or requested to be included within the VSs/CSs is larger than a threshold. If yes, the MRM entity 924 sends a report indicating the number of user networks 902a, 902b...902n (and possibly their bearer requirements) which have the AR2 in their VSs/CSs to the ARM 911b. If not, then the MRM entity 924 operates as normal. The ARM 911b can also receive additional information from the MRM entity 924 in step 14 such as (for example): (1) an instruction as to which AR or sub-fractions to pre-reserve; (2) information about the potentially required AR such that the access resource management entity may be adapted to derive information for the pre-reservation step; (3) information about a fraction of the potentially required AR exceeding the threshold such that the access resource management entity may be adapted to derive information for the pre-reservation step; (4) information about bearers and/or services and/or preference information (e.g. related to subscription information) associated with the potentially required AR such that the access resource management entity may be adapted to derive more accurate information for the pre-reservation step.

15. The ARM 911b performs the following functions: (a) determine the required resources and the probability that these resources would be used and from this determine how much resources should be reserved; (b) check available resources; (c) pre-reserve resources; and (d) determine the ratio of rejection. There is a benefit in pre-reserving resources in that the pre-reservation reduces the probability of not having enough resources available when a LC-establishment for the user network 902a, 902b... 902n is initiated and/or an AR is selected (for AS) for a user network 902a, 902b...902n.

The ARM 911b can perform step 15 by using information (e.g., contained in the AR2 report) about the potentially required AR where, for example, that information can be information about a potentially required bearer and/or potentially required service related to the potentially required AR. For instance, this additional information may be e.g. a bearer and/or service identifier such that the ARM 911b can estimate the potentially required access resources more precisely based on the identifier and correlated (stored) resource information for each indicated bearer and/or service or based on explicit required access resource information like MBits/sec needed for a particular AR in a candidate or validated set. Alternatively, the additional information may be about a fraction of the potentially required access resources exceeding a threshold.

16. The ARM 911b sends a report result back to the MRM entity 924. In one example, the report can include information about the pre-reserved access resources, and information about an amount or a fraction of the user networks 902a, 902b...902n (including user terminals 902a, 902b...902n) that are to be rejected.

17. The MRM entity 924 determines if and to what extent AR2 has to be blocked (rejected) in user network 902a and then update the VS and/or CS accordingly.

18. The MRM entity 924 sends a confirm/remove message which indicates the results of step 17 to the MRM entity 914 located within the user network 902a.

19. The MRM entity 914 updates the VSs and CSs upon receiving the confirm/remove message.

20. The MRM entity 914 and MRM entity 924 have access selection signaling to select resources associated with AR2 to populate ASs. Alternatively, if the access selection is supported by the access network MRRM 924 then the access selection signaling with the MRM entity 924 is optional. It can also be that the access selection is only done in the UN 902a, 902b...902n.

21. The MRM entity 914 sends an attach AR2 message to the GLL entity 916 within the user network 902a.

22. The GLL entity 916 and ARM 911b both interact with one another to perform the attachment procedure and setup an access flow (e.g., see FIGURES 3-5). The present invention which is associated with steps 12-18 helps improve the success performance of this attachment procedure and access flow setup step.

23. The GLL entity 916 sends an AR2 attach message to the MRM entity 914.

24. The MRM entity 914 and MRM entity 924 execute a handover process.

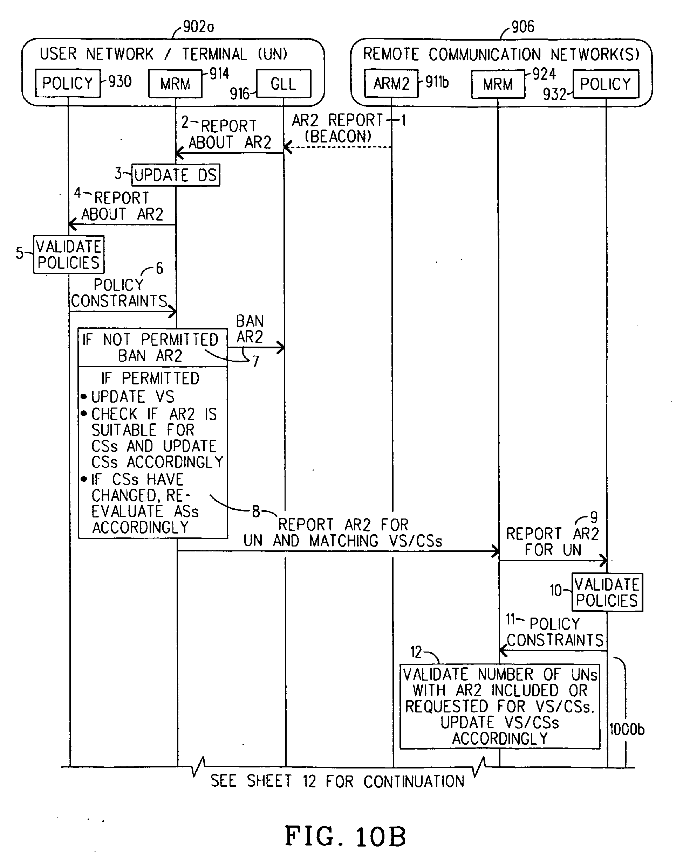

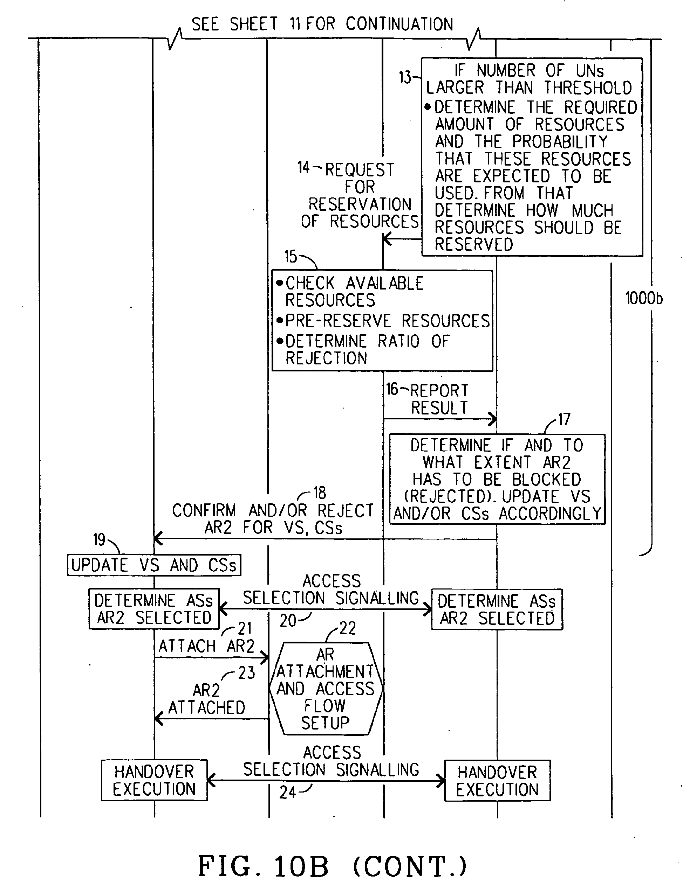

Note 1 : Steps 12-18 are associated with method 1000a while steps 1-11 and 19-24 are existing technology.
Note 2: in case of changes in resource availability/utilization of the AR, the ARM 911b can notify the MRM entity 924 about a change of this situation. Then, the MRM entity 924 for example could limit the amount of time the AR can be allowed in the VS/CS of the user networks 902a, 902b...902n.
Note 3: There are different options of realizing the MRM entity 924. For instance, there can be one centralized MRM entity 924 in the remote communications network 906. Or, the MRM functionality can be distributed in multiple MRM entities 924. Alternatively, the MRM entity 924 could be co-located/embedded with the ARMs 911a, 911b...911n.
Referring to FIGURE 10B, there is a signal flow diagram which is used to help explain the steps of a method 1000b for optimizing access in a multi-access network environment in accordance with a second embodiment of the present invention. The signal flow diagram has the following steps:

1. The ARM 911b (for example) within the remote communications network 906 sends an AR2 report (access resource report) to the GLL entity 916 located within the user network 902a (in this case a mobile terminal 902a).

2. The GLL entity 916 forwards the AR2 report to the MRM entity 914 located within the user network 902a.

3. The MRM entity 914 updates the DS set.

4. The MRM entity 914 sends an AR2 report to the policy function 930 located within the user network 902a.

5-6. The policy function 930 accesses the appropriate validate policies and forwards the policy constraints to the MRM entity 914.

7-8. The MRM entity 914 based on the received policy constraints can ban the AR2 and send a ban AR2 signal to the GLL entity 916 (see step 7). Or, the MRM entity 914 based on the received policy constrains can permit the AR2. In this case, the MRM entity 914 performs the following: (a) update VS; (b) check if AR2 is suitable for CSs and update CSs accordingly; and (c) if CSs have changed, re-evaluate ASs accordingly. Then, the MRM entity 914 sends an AR2 report and matching VSs/CSs to the MRM entity 924 located within the remote communications network 906 (see step 8).

9. The MRM entity 924 forwards the received AR2 report to a policy function 932 within the remote communications network 906.

10-11. The policy function 903 accesses the validate policies and forwards the policy constraints to the MRM entity 924.

12. The MRM entity 924 validates the number of user networks 902a, 902b...902n with AR2 included or requested to be included within the VSs/CSs and updates the VSs/CSs accordingly.

13-14. The MRM entity 924 determines if the number of user networks 902a, 902b...902n with AR2 included or requested to be included within the VSs/CSs is larger than a threshold. If yes, then the MRM entity 924 determines the required resources and the probability that these resources would be used and from this determine how much resources should be reserved. Then, the MRM entity 924 sends a resource reservation request to the ARM 911b. If not, then the MRM entity 924 operates as normal.

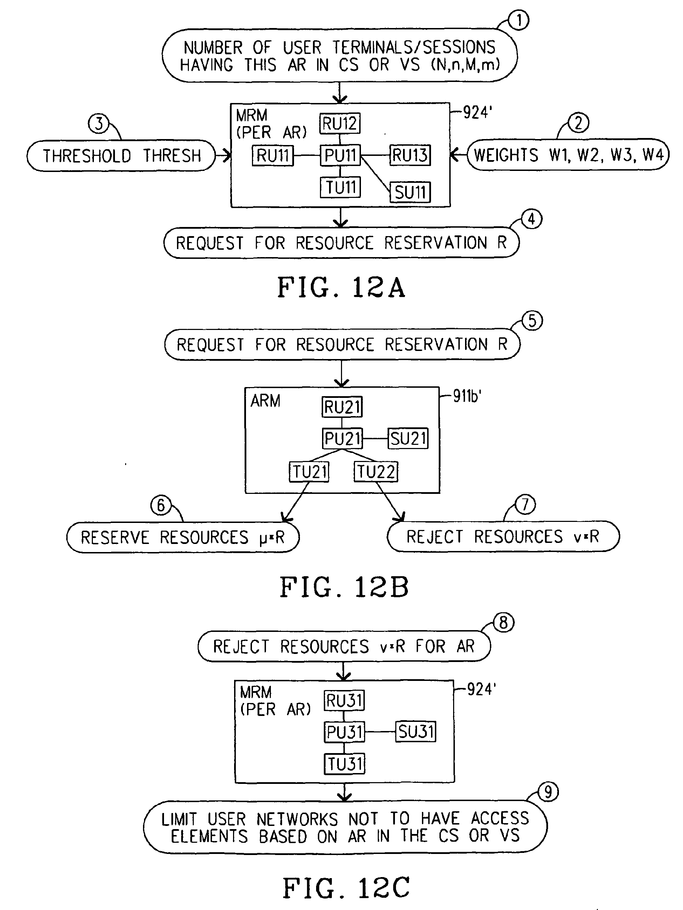

The MRM entity 924 can perform steps 13-14 by using information (e.g., contained in the AR2 report) about the potentially required AR where, for example, that information can be information about a potentially required bearer and/or potentially required service related to the potentially required AR. For instance, this additional information may be e.g. a bearer and/or service identifier such that the MRM entity 924 can estimate the potentially required access resources more precisely based on the identifier and correlated (stored) resource information for each indicated bearer and/or service or based on explicit required access resource information like MBits/sec needed for a particular AR in a candidate or validated set. If desired, this additional information may be represented by a threshold. Moreover, the MRM entity 924 can receive this information from a storage unit (see FIG. 12A) instead of from the ARM 911b. If, the MRM entity 924 receives this information from the ARM 911b then this information could be used to update the threshold (e.g., on a regular basis, pre-defined time intervals, event driven).

15. The ARM 911b upon receiving the resource reservation request performs the following functions: (a) check available resources; (c) pre-reserve resources; and (d) determine the ratio of rejection. There is a benefit in pre-reserving resources in that the pre-reservation reduces the probability of not having enough resources available when a LC-establishment for the user network 902a, 902b...902n is initiated and/or an AR is selected (for AS) for a user network 902a, 902b...902n.

16. The ARM 911b sends a report result back to the MRM entity 924. In one example, the report can include information about the pre-reserved access resources, and information about an amount or a fraction of the user networks 902a, 902b...902n (including user terminals 902a, 902b...902n) that are to be rejected.

17. The MRM entity 924 determines if and to what extent AR2 has to be blocked (rejected) in user network 902a and then update the VS and/or CS accordingly.

18. The MRM entity 924 sends a confirm/remove message which indicates the results of step 17 to the MRM entity 914 located within the user network 902a.

19. The MRM entity 914 updates the VSs and CSs upon receiving the confirm/remove message.

20. The MRM entity 914 and MRM entity 924 have access selection signaling to select resources associated with AR2 to populate ASs. Alternatively, if the access selection is supported by the access network MRRM 924 then the access selection signaling with the MRM entity 924 is optional. It can also be that the access selection is only done in the UN 902a, 902b...902n.

21. The MRM entity 914 sends an attach AR2 message to the GLL entity 916 within the user network 902a.

22. The GLL entity 916 and ARM 911b both interact with one another to perform the attachment procedure and setup an access flow (e.g., see FIGURES 3-5). The present invention which is associated with steps 12-18 helps improve the success performance of this attachment procedure and access flow setup step.

23. The GLL entity 916 sends an AR2 attach message to the MRM entity 914.

24. The MRM entity 914 and MRM entity 924 execute a handover process.

Note 1: Steps 12-18 are associated with method 1000b while steps 1-11 and 19-24 are existing technology.

Note 2: in case of changes in resource availability/utilization of the AR, the ARM 911b can notify the MRM entity 924 about a change of this situation. Then, the MRM entity 924 for example could limit the amount of time the AR can be allowed in the VS/CS of the user networks 902a, 902b...902n.

Note 3: There are different options of realizing the MRM entity 924. For instance, there can be one centralized MRM entity 924 in the remote communications network 906. Or, the MRM functionality can be distributed in multiple MRM entities 924. Alternatively, the MRM entity 924 can be co-located/embedded with the ARMs 911a, 911b...911n.

The two methods 1000a and 1000b indicate that the ARM 911a (for example) knows about the usage of resources (load, availability) while the MRM entity 924 knows about what candidate ARs in the CS/VS are being considered as access connections by the user networks 902a, 902b...902n. Then, in method 1000a the MRM entity 924 reports to the ARM 911b the number of user networks 902a, 902b....902n that consider a particular AR as a candidate for an access connection. Thereafter, the ARM 911b determines depending on their resource knowledge if and to what extent this situation is feasible, and then sends a report back to the MRM entity 924. In this scheme, the ARM 911b has the major logic for determining whether to block or admit this AR in the CSs/VSs of the user networks 902a, 902b.... 902n. While, in method 1000b the MRM entity 924 sends a resource request to the ARM 911b and then receives "resource information" in the form of a report from the ARM 911b and then determines if and how many user networks 902a, 902b... 902n should have the same AR in their CSs/VSs. In this scheme, the MRM entity 924 has the major logic for determining whether to block or admit this AR in the CSs/VSs of the user networks 902a, 902b....902n. In both schemes, the ARM 911b (in method 1000a) or the MRM entity 924 (in method 1000b) needs to estimate the required resources based on the number of user networks 902a, 902b...902n that are considering to use the same AR as a candidate for access connections. Exemplary ways/logic about how the ARM 911b (and other ARMS 911a...911n) or the MRM entity 924 can estimate the required resources are as follows:

A. The ARM 911b or MRM entity 924 could determine the estimated resource requirements by using the amount of possibly required resources if the AF/AR in all of the VSs and/or CSs should in the future be selected by the access selection function. Different levels of sophistication in this step are possible.

B. The ARM 911b or MRM entity 924 could determine the estimated resource requirements by determining a probability that the AF/AR in the VSs and/or CSs will be selected by an access selection function to be included in the ASs. Different levels of sophistication in this step are possible, ranging from taking a fixed value (e.g., based on historic events) up to and including the consideration of the metrics used in access selection.

C. The ARM 911b or MRM entity 924 could determine the estimated resource requirements that should be reserved from the amount of possibly required resources and the probability of these resources really being used in future. Different levels of sophistication are possible in this step.

D. The ARM 911b or MRM entity 924 could determine the estimated resource requirements by using a default value which can be e.g. based on measurements from the past, or based on a pre-determined value. Plus, if an AR is element of a VS or CS this does not automatically imply that an access flow for this AR will be established instead there is only an increased probability that this will happen. Thus, the ARM 911b or MRM entity 924 when determining the estimated resource requirements can take this into account and apply a certain percentage to the originally estimated resource requirement to come-up with the final estimated required resources. If desired, the precision of estimation of required resources can be further improved in the following ways:

1. For requests to add the AR only in the VS but not in the CS, then the ARM 911b or MRM entity 924 can use a lower probability percentage to determine the final estimated required resources. The reason, if the AR is in the CS it is already actively considered to be used for an ongoing data bearer. If the AR is only in the VS, then the AR is only considered for the case that a data bearer might become active.

2. For requests to add the AR to the CS then the data bearer requirements of the CS can be used by the ARM 911b or MRM entity 924 to estimate more precisely the corresponding resource requirements.

3. For each of the ARs in the CS a suitability value is determined from different parameters which indicate how well each AR is suited for service. For instance, if there are two ARs in the CS which have a significantly higher suitability value than another access resource, then it is not so likely that this other access resource will be selected for the service. The ARM 911b or MRM entity 924 can use this information to derive a probability percentage of the ARs being selected, and the amount of estimated resources could depend on this probability.

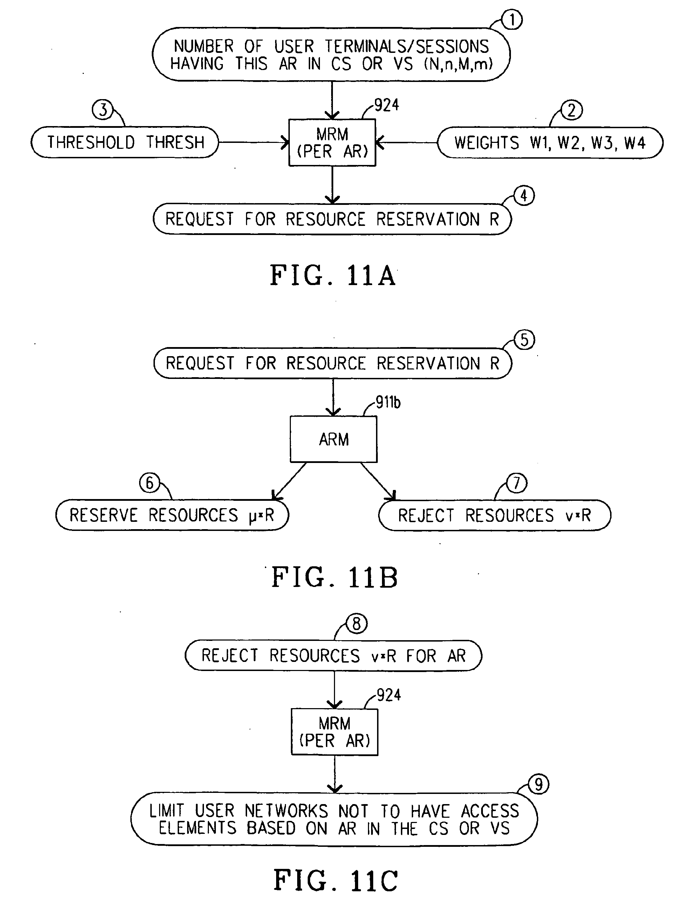

E. The MRM entity 924 with the help of ARM 911a could determine the required amount of resources and the probability that these resources are expected to be used and from that estimate how much resources should be reserved as follows (see FIGURES 11A-11C):

Referring to FIGURES 11A-11C, there are several diagrams of an exemplary MRRM 924 and an exemplary ARM 911b which are used to help explain another method for optimizing access in a multi-access network environment in accordance with a third embodiment of the present invention. The steps are as follows:

1. The MRM entity 924 determines the number of user networks 902a, 902b...902n and user sessions which have the relevant AR (or derived LCs) in their VS or CS (e.g., see numeral "1" in FIGURE 11A):

- N - number of user networks 902a, 902b...902n with an LC based on the AR included in VS.

- n - number of user networks 902a, 902b...902n with the AR included in VS.

- M - number of user sessions with an LC based on the AR included in CS.

- m - number of users sessions with the AR included in CS.

Note 1: This step could also be modified such that the N and n only consider the ARs (or derived LCs) that are in the VSs but not at the same time in the corresponding CSs.
Note 2: This step could also be modified such that the M and m only consider the ARs (or derived LCs) that are in the CSs but not at the same time in the corresponding ASs.

2. The MRM entity 924 obtains weights $w_1$ - $w_4$ (see numeral "2" in FIGURE 11A) and could determine the required resources R as follows, e.g.:

$$R = w_1 \cdot N + w_2 \cdot n + w_3 \cdot M + w_4 \cdot m$$

The weights $w_1$ - $w_4$ for instance can be based on pre-determined values or they can be derived from past experience/measurements as follows:

- $w_1 = w_2 = w_3 = w_4$ (no differentiation between CS, VS, AR and LC)

- $w_1 = w_3 > w_2 = w_4$ (LCs are stronger weight than ARs)

- $w_1 = w_2 < w_3 = w_4$ (CS is stronger weight than VS)

- $w_1 = w_2 < w_4 < w_3$ (CS for LCs have a stronger weight than for ARs, and in total stronger weight than for VS)

- $w_2 <= w_1$ and $w_4 <= w_3$ (LCs are stronger weight than ARs)

- $w_2 <= w_1 <= w_4 <= w_3$ (CS is stronger weight than VS and LCs are stronger weight than ARs)

Plus, the relationship of the weights can depend on the following:

- If the resources for LCs are already reserved, the weights $w_1$ and $w_3$ chosen could be smaller.

- If the network attachment process to establish an LC from an AR takes a long time and/or is signaling intensive, then the weights $w_2$ and $w_4$ chosen could be larger.

Alternatively, R can be calculated such that the ranking of the ARs/LCs within the CS or VS is also considered. Every AR/LC in the CS/VS is associated with a utility u, such that a high value of u indicates a high probability that the access is eventually going to be selected to be in the AS, e.g.:

$$R = w_1 \cdot \sum_{x1=1}^{N} u_{VS.x1} + w_2 \cdot \sum_{x2=1}^{n} u_{VS.x2} + w_3 \cdot \sum_{x3=1}^{M} u_{CS.x3} + w_4 \cdot \sum_{x4=1}^{m} u_{CS.x4}$$

If desired, for access elements in the CS, the contribution to R can be normalized to the expected required resources r depending on the service requirement (data rate, delay, jitter, e.g. large for video applications, small for telephony) as follows, e.g.:

$$R = w_1 \cdot \sum_{x1=1}^{N} u_{VS.x1} + w_2 \cdot \sum_{x2=1}^{n} u_{VS.x2} + w_3 \cdot \sum_{x3=1}^{M} (u_{CS.x3} \cdot r_{x3}) + w_4 \cdot \sum_{x4=1}^{m} (u_{CS.x4} \cdot r_{x3})$$

Furthermore, the contribution to $R$ can be weighted according to the preference value p of the particular user network 902a (for example) which is part of the policy profile (e.g., depending on the subscription, e.g., a gold subscriber would be preferred in the analysis and could get pre-reserved access resources in a preferred manner and/or could get less access resources excluded by a blocking (limiting step) compared to a silver or bronze subscriber) as follows, e.g.:

$$R = w_1 \cdot \sum_{x1=1}^{N} p_{x1} \cdot u_{VS.x1} + w_2 \cdot \sum_{x2=1}^{n} p_{x2} \cdot u_{VS.x2} + w_3 \cdot \sum_{x3=1}^{M} (p_{x3} \cdot u_{CS.x3} \cdot r_{x3}) + w_4 \cdot \sum_{x4=1}^{m} (p_{x4} \cdot u_{CS.x4} \cdot r_{x3})$$

3-4. The MRM entity 924 obtains a threshold "thresh" (see numeral "3" in FIGURE 11A) and determines if R is larger than "thresh" and if yes then a resource reservation request R is sent to the corresponding ARM 911b (see numeral "4" in FIGURE 11A). The threshold Thresh is a constant. Alternatively, the Thresh can be adapted to the amount of resources that are available for the AR. For instance, if few resources are left, then the Thresh would be decreased.

5-7. The ARM 911b upon receiving the resource reservation request R (see numeral "5" in FIGURE 11B) determines in view of the amount of resources that remain available for that particular AR the amount of resources that should be reserved and the amount of resources that should be rejected. Then, the ARM 911b sends a confirmation report of rejected and reserved resources back to the MRM entity 924 (see numerals "6" and "7" in FIGURE 11B).

8-9. The MRM entity 924 upon receiving a rejection message (e.g., reject resources v*R) functions to limit the usage of the AR in the CS and/or VS of the user networks 902a, 902b...902n (see numerals "8" and "9" in FIGURE 11C). The MRM entity 924 limits the AR in the CS and VS such that R' <= v*R, where R' is a modified R in which the AR has been removed from some CS or VS. The process to determine from which CS and VS in user networks 902a, 902b... 902n to remove the AR could depend on (for example):

- The priority preference of the user networks 902a, 902b...902n as determined by a policy.

- The size of the access sets CS and VS within the user networks 902a, 902b...902n. If a particular CS and VS are large, i.e. a large number of alternatives exist, then these CS and VS sets would be the ones that are preferably limited.

Referring to FIGURES 12A-12C, there are several diagrams of an exemplary MRRM 924' and an exemplary ARM 911b' which are used to help explain one way that different components can be incorporated therein to implement the method discussed with respect to FIGURES 11A-11C. FIGURE 12A depicts an exemplary MRM entity 924' (which corresponds with the MRM entity 924 shown in FIGURE 11A) that determines R and sends a resource reservation request R by using at least one receiving unit RU11 (which receives the aforementioned N, n, M and m values), at least one receiving unit RU12 (which receives the weights $w_1$-$w_4$), at least one receiving unit RU13 (which receives Thresh), at least one processing unit PU11 (which processes all of the received values), at least one transmission unit TU11 (which transmits the resource reservation request R) , and preferably at least one storage unit SU11 (which stores various values and program instructions). If desired, the units may be combined, e.g. multiple receiving units RU11-RU13 and transmitting unit TU11 may be implemented within a single transmitter. Plus, the Thresh and/or the weights $w_1$-$w_4$ may alternatively be obtained from the storage SU11.

FIGURE 12B depicts an exemplary ARM 911b' (which corresponds with the ARM 911b shown in FIGURE 11B) that receives the resource reservation request R and outputs the amount of resources that are reserved (reserve resources $\mu$*R) and the amount of resources that are rejected (reject resources v*R). The exemplary ARM 911b' does this by using at least one receiving unit RU21 (which receives the resource reservation request R), at least one processing unit PU21 (which processes the resource reservation request R), at least one transmission unit TU21 (which transmits the reserve resources $\mu$*R), at least one transmission unit T22 (which transmits the reject resources v*R) and preferably at least one storage unit SU21. If desired, the units may be combined, e.g. the receiving unit RU21 and multiple transmitting units TU21 and TU22 may be implemented within a single transmitter.

FIGURE 12C depicts an exemplary MRM entity 924' (which corresponds with the MRM entity 924 shown in FIGURE 11C) that receives the reject resources v*R and outputs information associated with limiting the usage of the AR in the VS and/or CS of the user networks 902a, 902b...902n. The exemplary MRM entity 924' does this by using at least one receiving unit RU31 (which receives the reject resources v*R), at least one processing unit PU31, at least one transmission unit TU31 (which outputs information associated with limiting the usage of the AR in user networks 902a, 902b...902n), and preferably at least one storage unit SU31. If desired, the units may be combined, e.g. the receiving unit RU31 and transmitting unit TU31 may be implemented within a single transmitter.

The present invention also concerns computer programs that include portions of software codes that can be retrieved to enable the implementation of anyone of the methods 1000 described herein when operated at a multi-resource managing entity like e.g. a MRM and an access resource managing entity like e.g. an ARM. The respective computer programs can be stored on one or more computer readable media. The computer readable media can be a permanent or rewritable memory within the MRM entity 924, the ARM 911a, 911b...911n, or located externally. The respective computer programs can be also transferred to the MRM entity 924 and the ARM 911a, 911b...911n for example via a cable or a wireless link as a sequence of signals.

The description herein uses the term MRRM which refers to a multi-radio resource management entity. This term is used on a common basis in the context of an wireless access environment. However, the present invention can also be used in a fixed access environment and not just in a wireless access environment. Therefore, although the term MRRM is used in some the examples provided in the aforementioned description, the term MRM alias Multi-Resource Management could have also been used to reflect that the present invention applies to wireless and/or fixed access environment. Thus, for pure wireless embodiments the term MRRM is strictly correct and may be applied unchanged. But, for fixed access embodiments with or without wireless access, the term MRM may be used. It is emphasized, that the examples provided herein could be easily adapted to such fixed and/or wireless network access environments by replacing the MRRM by MRM. Likewise, the term ARM is an example for an access resource managing entity which may manage wireless and/or fixed access resources. Whereas, the term RRM can be used to describe an access resource managing entity which manages only wireless access resources.

From the foregoing, it should be appreciated that the present invention relates to a MRM entity 924 (or MRRM 924) that keeps a list of ARs which are used in the VSs and/or CSs of different user networks 902a, 902b...902n. If a specific AR is in more than a certain number of VSs/CSs in the user networks 902a, 902b...902n, then the MRM entity 924 interacts with the corresponding ARM 911b (for example) which manages that particular AR to ask if sufficient resources of the AR are available to be used by this many user networks 902a, 902b...902n. If no, then the MRM entity 924 limits the number of user networks 902a, 902b... 902n that may include the specific AR in their VSs/CSs. Thus, the present invention solves the aforementioned problem where too many user networks 902a, 902b... 902n could monitor and try to access the same AR in a short time period which could lead to an overload of the AR, a failure of the connection establishment, or a failure of the access selection procedure. Plus, the present invention has many other advantages some of which are as follows:

1. The present invention decreases the risk for access selection/handover failure in multi-access networks by limiting the number of candidate users for a certain access resource and/or by reserving access resources for these candidate users.

2. The present invention enables energy efficient multi-access management for user networks 902a, 902b...902n that happen to be mobile terminals.

3. The present invention causes a low risk of failure when establishing a connection to an access resource as result of access selection.

The present invention in addition to the aforementioned multi-access network is applicable to different types of multi-access network environments wherein for instance an access resource managing entity may be embodied in a network intrinsic RRM and the MRRM may communicate with the network intrinsic RRM via the GLL. In some applications, the network intrinsic RRM (as examples for access resource managing entities) may reside at an RNC or a WLAN access point. Basically, an intrinsic RRM is an access-specific RRM which is also often used in an AN. For more details about these different types of multi-access network environments reference is made to the aforementioned document "Ambient Networks, "Multi-Radio Access Architecture", Project Deliverable D2-4, December 2005.
Although several embodiments of the present invention have been illustrated in the accompanying Drawings and described in the foregoing Detailed Description, it should be understood that the invention is not limited to the disclosed embodiments, but is also capable of numerous rearrangements, modifications and substitutions without departing from the scope of the invention as set forth and defined by the following claims.

**Claims**

1.  A method for optimizing access in a multi-access network environment, wherein a multi-resource managing entity (924, 924') for managing access to at least one access network (904a, 904...904n) performs the following steps:

    obtaining information about a potentially required access resource of one of the at least one access network (904a, 904...904n);
    determining that more than a certain number of user networks (902a, 902b...902n) may potentially use the access resource to establish a connection with the one access network;
    obtaining information indicating an availability of the access resource; and
    limiting a number of the user networks (902a, 902b...902n) that may potentially access the access resource in view of the obtained availability information.

2.  The method of Claim 1, wherein said information about the potentially required access resource comprises information about whether the access resource and/or a related access flow is part of a validated set or a candidate set in each of the user networks (902a, 902b...902n).

3.  The method of Claim 1 or 2, wherein said step of obtaining information indicating the availability of the access resource further comprises:

    sending a message indicating a number of the user networks (902a, 902b...902n) that may potentially use the access resource to an access resource managing entity (911a, 911b...911n, 911b') that is also associated with the one access network, wherein the access resource managing entity (911a, 911b...911n, 911b') determines how much resources should be reserved by calculating a required amount of resources that are expected to be used by the user networks (902a, 902b...902n), checks availability of the access resource, pre-reserves resources associated with the access resource, and sends a report containing availability information about the pre-reserved resources back to the multi-resource managing entity (924, 924').

4.  The method of Claim 1 or 2, wherein said step of obtaining information indicating the availability of the access resource further comprises:

    determining how much resources should be reserved by calculating a required amount of resources that are expected to be used by the user networks (902a, 902b...902n); and
    sending a reservation request message indicating at least the required amount of resources to an access resource managing entity (911a, 911b...911n, 911b') that is also associated with the one access network, wherein the access resource managing entity (911a, 911b...911n, 911b') checks availability of the access resource, pre-reserves resources associated with the access resource, and sends a report containing availability information about the pre-reserved resources back to the multi-resource managing entity (924, 924').

5. The method according to Claim 3 or 4, wherein the calculated required amount of resources is at least based on a probability that these resources are expected to be used by the user networks (902a, 902b...902n).

6. The method according to Claim 3 or 4, wherein the calculated required amount of resources is at least based on at least one of a past measurement, a pre-determined value, an estimated bearer requirement or weighted values.

7. The method according to Claim 3 or 4, wherein said report further contains availability information about a fraction of the user networks (902a, 902b...902n) that should be rejected.

8. The method according to Claim 3 or 4, wherein said access resource managing entity (911a, 911b...911n, 911b') is embodied in a network intrinsic radio resource managing entity.

9. A computer program product comprising software code loadable into a processing unit (PU11, PU31) of a multi-resource managing entity (924, 924') adapted to perform all the steps of a method according to any of the claims 1 to 6.

10. A multi-resource managing entity (924, 924') comprising:

a processing unit (PU11, PU31); and
a storage unit (SU11, SU31), where said processing unit (PU11, PU31) obtains instructions from said storage unit (SU11, SU31) and processes those instructions to enable the following:

obtain information about a potentially required access resource of one of the at least one access network (904a, 909...909n);
determine that more than a certain number of user networks (902a, 902b...902n) may potentially use the access resource to establish a connection with the one access network;
obtain information indicating an availability of the access resource; and
limit a number of the user networks (902a, 902b...902n) that may potentially access the access resource in view of the obtained availability information.

11. The multi-resource managing entity (924, 924') of Claim 10, wherein said information about the potentially required access resource includes information about whether the access resource and/or a related access flow is part of a validated set or a candidate set in each of the user networks (902a, 902b...902n).

12. The multi-resource managing entity (924, 924') of Claim 10, wherein said processing unit (PU11, PU31) is adapted to perform the steps of the method according to any of the claims 3 to 7.

13. A method for optimizing access in a multi-access network environment, wherein an access resource managing entity (911a, 911b...911n, 911b') managing access to at least one access resource performs the following steps:

obtaining information from a multi-resource managing entity (924, 924') where said information is related to a potentially required access resource that may be used by one or more user networks (902a, 902b...902n);
checking availability of the potentially required access resource; and
sending a report containing availability information back to the multi-resource managing entity (924, 924').

14. The method of Claim 13, further comprising the step of pre-reserving resources associated with the potentially required access resource with the availability information comprising information about the pre-reserved resources and information about the fraction of user networks (902a, 902b...902n) that are to be rejected.

15. The method of Claim 13, wherein said obtained information includes a reservation request indicating at least a required amount of the access resource.

16. The method of Claim 13, wherein if said obtained information includes an indication of a number of user networks (902a, 902b...902n) that may possibly use the access resource then said access resource managing entity (911a, 911b...911n, 911b') prior to performing the checking step and the sending step performs a step of determining how many resources are expected to be used by the user networks (902a, 902b...902n).

**17.** A computer program product comprising software code loadable into a processing unit (PU21) of an access resource managing entity (911a, 911b...911n, 911b') adapted to perform all the steps of a method according to any of the claims 13 to 16.

**18.** An access resource managing entity (911a, 911b...911n, 911b') comprising:

a processing unit (PU21); and
a storage unit (SU21), where said processing unit (PU21) obtains instructions from said storage unit (SU21) and processes those instructions to enable the following:

obtain information from a multi-resource managing entity (924, 924') where said information is related to a potentially required access resource that may be used by one or more user networks (902a, 902b...902n); check availability of the potentially required access resource; and
send a report containing availability information back to the multi-resource managing entity (924, 924').

**19.** The access resource managing entity (911a, 911b...911n, 911b') of Claim 18, wherein said processing unit (PU21) further enables pre-reserving resources associated with the potentially required access resource with the availability information comprising information about the pre-reserved resources and information about the fraction of user networks (902a, 902b...902n) that are to be rejected.

**20.** The access resource managing entity (911a, 911b...911n, 911b') of Claim 18, wherein said processing unit (PU21) prior to enabling the check operation and the send operation enables a determination of how many resources are expected to be used by the user networks (902a, 902b...902n).

**Patentansprüche**

**1.** Verfahren zur Optimierung von Zugang in einer Mehrfachzugangsnetzumgebung, wobei eine Mehrfachressourcenverwaltungsinstanz (924, 924') zum Verwalten des Zugangs zu wenigstens einem Zugangsnetz (904a, 904...904n) die folgenden Schritte ausführt:

Erhalten von Information über eine möglicherweise erforderliche Zugangsressource eines des wenigstens einen Zugangsnetzes (904a, 904...904n);
Bestimmen, dass mehr als eine bestimmte Anzahl von Benutzernetzen (902a, 902b...902n) die Zugangsressource möglicherweise verwenden kann, um eine Verbindung mit dem einen Zugangsnetz herzustellen;
Erhalten von Information, die eine Verfügbarkeit der Zugangsressource anzeigt; und
Begrenzen einer Anzahl der Benutzernetze (902a, 902b...902n), die auf die Zugangsressource möglicherweise zugreifen können, in Anbetracht der erhaltenen Verfügbarkeitsinformation.

**2.** Verfahren nach Anspruch 1, wobei die Information über die möglicherweise erforderliche Zugangsressource Information darüber umfasst, ob die Zugangsressource und/oder ein in Beziehung stehender Zugangsfluss Teil eines validierten Satzes oder eines Kandidatensatzes in jedem der Benutzernetze (902a, 902b...902n) ist.

**3.** Verfahren nach Anspruch 1 oder 2, wobei der Schritt des Erhaltens von Information, welche die Verfügbarkeit der Zugangsressource anzeigt, ferner umfasst:

Senden einer Nachricht, die eine Anzahl der Benutzernetze (902a, 902b...902n) anzeigt, die die Zugangsressource möglicherweise verwenden können, an eine Zugangsressourcenverwaltungsinstanz (911a, 911b...911n, 911b'), die ebenfalls mit dem einen Zugangsnetz verbunden ist, wobei die Zugangsressourcenverwaltungsinstanz (911a, 911b...911n, 911b') bestimmt, wie viele Ressourcen reserviert werden sollten, indem sie eine erforderliche Menge von Ressourcen berechnet, die durch die Benutzernetze (902a, 902b...902n) voraussichtlich verwendet werden, die Verfügbarkeit der Ressource prüft, mit der Zugangsressource assoziierte Ressourcen vorreserviert und einen Bericht, der Verfügbarkeitsinformation über die vorreservierten Ressourcen enthält, an die Mehrfachressourcenverwaltungsinstanz (924, 924') zurücksendet.

**4.** Verfahren nach Anspruch 1 oder 2, wobei der Schritt des Erhaltens von Information, welche die Verfügbarkeit der Zugangsressource anzeigt, ferner umfasst:

Bestimmen, wie viele Ressourcen reserviert werden sollten, durch Berechnen einer erforderlichen Menge von Ressourcen, die durch die Benutzernetze (902a, 902b...902n) voraussichtlich verwendet werden; und Senden einer Reservierungsanforderungsnachricht, welche wenigstens die erforderliche Menge von Ressourcen anzeigt, an eine Zugangsressourcenverwaltungsinstanz (911a, 911b...911n, 911b'), die ebenfalls mit dem einen Zugangsnetz verbunden ist, wobei die Zugangsressourcenverwaltungsinstanz (911a, 911b...911n, 911b') die Verfügbarkeit der Zugangsressource prüft, mit der Zugangsressource assoziierte Ressourcen vorreserviert und einen Bericht, der Verfügbarkeitsinformation über die vorreservierten Ressourcen enthält, an die Mehrfachressourcenverwaltungsinstanz (924, 924') zurücksendet.

5. Verfahren nach Anspruch 3 oder 4, wobei die berechnete erforderliche Menge von Ressourcen wenigstens auf einer Wahrscheinlichkeit basiert, dass diese Ressourcen durch die Benutzernetze (902a, 902b...902n) voraussichtlich verwendet werden.

6. Verfahren nach Anspruch 3 oder 4, wobei die berechnete erforderliche Menge von Ressourcen wenigstens auf wenigstens einer früheren Messung, einem vorbestimmten Wert, einem geschätzten Trägererfordernis oder gewichteten Werten basiert.

7. Verfahren nach Anspruch 3 oder 4, wobei der Bericht ferner Verfügbarkeitsinformation über einen Teil der Benutzernetze (902a, 902b...902n) enthält, die abgelehnt werden sollten.

8. Verfahren nach Anspruch 3 oder 4, wobei die Zugangsressourcenverwaltungsinstanz (911a, 911b...911n, 911b') in einer netzintrinsischen Funkressourcenverwaltungsinstanz verwirklicht ist.

9. Computerprogrammprodukt, umfassend Softwarecode, der in eine Verarbeitungseinheit (PU11, PU31) einer Mehrfachressourcenverwaltungsinstanz (924, 924') geladen werden kann und so ausgelegt ist, dass er alle Schritte eines Verfahrens nach einem der Ansprüche 1 bis 6 ausführt.

10. Mehrfachressourcenverwaltungsinstanz (924, 924'), umfassend:

eine Verarbeitungseinheit (PU11, PU31); und
eine Speichereinheit (SU11, SU31), wobei die Verarbeitungseinheit (PU11, PU31) Anweisungen von der Speichereinheit (SU11, SU31) erhält und diese Anweisungen verarbeitet, um Folgendes zu ermöglichen:

Erhalten von Information über eine möglicherweise erforderliche Zugangsressource eines des wenigstens einen Zugangsnetzes (904a, 904...904n);
Bestimmen, dass mehr als eine bestimmte Anzahl von Benutzernetzen (902a, 902b...902n) die Zugangsressource möglicherweise verwenden kann, um eine Verbindung mit dem einen Zugangsnetz herzustellen;
Erhalten von Information, die eine Verfügbarkeit der Zugangsressource anzeigt; und
Begrenzen einer Anzahl von Benutzernetzen (902a, 902b...902n), die auf die Zugangsressource möglicherweise zugreifen können, in Anbetracht der erhaltenen Verfügbarkeitsinformation.

11. Mehrfachressourcenverwaltungsinstanz (924, 924') nach Anspruch 10, wobei die Information über die möglicherweise erforderliche Zugangsressource Information darüber umfasst, ob die Zugangsressource und/oder ein in Beziehung stehender Zugangsfluss Teil eines validierten Satzes oder eines Kandidatensatzes in jedem der Benutzernetze (902a, 902b...902n) ist.

12. Mehrfachressourcenverwaltungsinstanz (924, 924') nach Anspruch 10, wobei die Verarbeitungseinheit (PU11, PU31) so ausgelegt ist, dass sie die Schritte des Verfahrens nach einem der Ansprüche 3 bis 7 ausführt.

13. Verfahren zur Optimierung von Zugang in einer Mehrfachzugangsnetzumgebung, wobei eine Zugangsressourcenverwaltungsinstanz (911a, 911b...911n, 911b'), die den Zugang zu wenigstens einer Zugangsressource verwaltet, die folgenden Schritte ausführt:

Erhalten von Information von einer Mehrfachressourcenverwaltungsinstanz (924, 924'), wobei die Information mit einer möglicherweise erforderlichen Zugangsressource in Beziehung steht, das durch ein oder mehrere Benutzernetze (902a, 902b...902n) verwendet werden kann;

Prüfen der Verfügbarkeit der möglicherweise erforderlichen Zugangsressources; und

Zurücksenden eines Berichts, der Verfügbarkeitsinformation enthält, an die Mehrfachressourcenverwaltungsinstanz (924, 924').

**14.** Verfahren nach Anspruch 13, ferner umfassend den Schritt des Vorreservierens von Ressourcen, die mit der möglicherweise erforderlichen Zugangsressource assoziiert sind, wobei die Verfügbarkeitsinformation Information über die vorreservierten Ressourcen und Information über den Teil von Benutzernetzwerken (902a, 902b...902n), die abzulehnen sind, umfasst.

**15.** Verfahren nach Anspruch 13, wobei die erhaltene Information eine Reservierungsanforderung enthält, die wenigstens eine erforderliche Menge der Zugangsressource anzeigt.

**16.** Verfahren nach Anspruch 13, wobei dann, wenn die erhaltene Information eine Anzeige einer Anzahl von Benutzernetzen (902a, 902b...902n) enthält, die die Zugangsressource möglicherweise verwenden können, die Zugangsressourcenverwaltungsinstanz (911a, 911b...911n, 911b') vor dem Durchführen des Prüfschritts und des Sendeschritts einen Schritt des Bestimmens dessen ausführt, wie viele Ressourcen durch die Benutzernetze (902a, 902b... 902n) voraussichtlich verwendet werden.

**17.** Computerprogrammprodukt, umfassend Softwarecode, der in eine Verarbeitungseinheit (PU21) einer Zugangsressourcenverwaltungsinstanz (911a, 911b...911n, 911b') geladen werden kann und so ausgelegt ist, dass er alle Schritte eines Verfahrens nach einem der Ansprüche 13 bis 16 ausführt.

**18.** Zugangsressourcenverwaltungsinstanz (911a, 911b...911n, 911b'), umfassend:

eine Verarbeitungseinheit (PU21); und

eine Speichereinheit (SU21), wobei die Verarbeitungseinheit (PU21) Anweisungen von der Speichereinheit (SU21) erhält und diese Anweisungen verarbeitet, um Folgendes zu ermöglichen:

Erhalten von Information von einer Mehrfachressourcenverwaltungsinstanz (924, 924'), wobei die Information mit einer möglicherweise erforderlichen Zugangsressource in Beziehung steht, das durch ein oder mehrere Benutzernetze (902a, 902b...902n) verwendet werden kann;

Prüfen der Verfügbarkeit der möglicherweise erforderlichen Zugangsressource; und Zurücksenden eines Berichts, der Verfügbarkeitsinformation enthält, an die Mehrfachressourcenverwaltungsinstanz (924, 924').

**19.** Zugangsressourcenverwaltungsinstanz (911a, 911b...911n, 911b') nach Anspruch 18, wobei die Verarbeitungseinheit (PU21) ferner ein Vorreservieren von Ressourcen ermöglicht, die mit der möglicherweise erforderlichen Zugangsressource assoziiert sind, wobei die Verfügbarkeitsinformation Information über die vorreservierten Ressourcen und Information über den Teil von Benutzernetzwerken (902a, 902b...902n), die abzulehnen sind, umfasst.

**20.** Zugangsressourcenverwaltungsinstanz (911a, 911b...911n, 911b') nach Anspruch 18, wobei die Verarbeitungseinheit (PU21) vor dem Ermöglichen des Prüfvorgangs und des Sendevorgangs eine Bestimmung dessen ermöglicht, wie viele Ressourcen durch die Benutzernetze (902a, 902b...902n) voraussichtlich verwendet werden.

**Revendications**

**1.** Procédé pour optimiser l'accès dans un environnement de réseau à accès multiples, dans lequel une entité de gestion de ressources multiples (924,924') pour gérer l'accès à au moins un réseau d'accès (904a, 904...904n) effectue les étapes suivantes consistant à :

obtenir une information concernant une ressource d'accès potentiellement requise d'un de au moins un réseau d'accès (904a, 904...904n) ;

déterminer que plus d'un certain nombre de réseaux d'utilisateur (902a,902b...902n) peuvent potentiellement utiliser la ressource d'accès afin d'établir une connexion avec un réseau d'accès ;

obtenir une information indiquant une disponibilité de la ressource d'accès ; et

limiter un nombre de réseaux d'utilisateur (902a,902b...902n) qui peuvent potentiellement accéder à la ressource d'accès en vue de l'information de disponibilité obtenue.

**2.** Procédé selon la revendication 1, dans lequel ladite information concernant la ressource d'accès potentiellement requise comprend une information de ce que la ressource d'accès et/ou un flux d'accès afférent fait partie d'un ensemble validé ou d'un ensemble candidat dans chacun des réseaux d'utilisateur (902a, 902b...902n) .

**3.** rocédé selon la revendication 1 ou 2, dans lequel ladite étape d'obtention d'une information indiquant la disponibilité de la ressource d'accès comprend en outre de :

envoyer un message indiquant un nombre des réseaux d'utilisateur (902a,902b...902n) qui peuvent potentiellement utiliser la ressource d'accès à une entité de gestion de ressource d' a c c è s (911a, 911b...911n, 911b') qui est aussi associée à un réseau d'accès, dans lequel l'entité de gestion de ressource d'accès (911a, 911b... 911n, 911b' détermine combien de ressources doivent être réservées en calculant une quantité requise de ressources qui sont escomptées être utilisées par les réseaux d'utilisateur (902a,902b..902n), vérifie la disponibilité de la ressource d'accès, pré-réserve les ressources associées à la ressource d'accès, et renvoie un rapport contenant une information de disponibilité concernant les ressources pré-réservées à l'entité de gestion de ressources multiplex (924, 924').

**4.** Procédé selon la revendication 1 ou 2, dans lequel ladite étape d'obtention d'une information indiquant la disponibilité de la ressource d'accès comprend en outre de :

déterminer combien de ressources doivent être réservées en calculant une quantité requise de ressources qui sont escomptées être utilisées par les réseaux d'utilisateur (902a,902b...902n) ; et envoyer un message de demande de réservation indiquant au moins la quantité requise de ressources à une entité de gestion de ressources d'accès (911a, 911b...911n, 911b') qui est aussi associée à un réseau d'accès, dans lequel l'entité de gestion de ressource d'accès (911a,911b...911n,911b') vérifie la disponibilité de la ressource d'accès, pré-réserve les ressources associées à la ressource d'accès, et renvoie un rapport contenant une information de disponibilité concernant les ressources pré-réservées à l'entité de gestion de ressources multiples (924,924').

**5.** Procédé selon la revendication 3 ou 4, dans lequel la quantité requise de ressources calculée est au moins basée sur une probabilité que ces ressources sont escomptées être utilisées par les réseaux d'utilisateur (902a, 902b... 902n) .

**6.** Procédé selon la revendication 3 ou 4, dans lequel la quantité requise de ressources calculée est au moins basée sur au moins une d'une mesure antérieure, une valeur prédéterminée, une exigence de support estimée ou des valeurs pondérées.

**7.** Procédé selon la revendication 3 ou 4, dans lequel ledit rapport contient en outre une information de disponibilité concernant une fraction des réseaux d'utilisateur (902a,902b...902n) qui doivent être rejetés.

**8.** Procédé selon la revendication 3 ou 4, dans lequel ladite entité de gestion de ressources d'accès (911a, 911b... 911n, 911b') est réalisée en une entité de gestion de ressources radio intrinsèque au réseau.

**9.** Produit de programme informatique comprenant du code logiciel chargeable dans une unité de traitement (PU11,PU31) d'une entité de gestion de ressources multiples (924,924') adaptée afin d'exécuter toutes les étapes d'un procédé selon une quelconque des revendications 1 à 6.

**10.** Entité de gestion de ressources multiples (924,924') comprenant :

une unité de traitement (PU11,PU31) ; et
une unité de mémorisation (SU11,SU31), où ladite unité de traitement (PU11,PU31) obtient des instructions de ladite unité de mémorisation (SU11,SU31) et traite ces instructions afin de permettre ce qui suit :

obtenir une information concernant une ressource d'accès potentiellement requise d'un de au moins un réseau d'accès (904a, 904...904n) ;
déterminer que plus d'un certain nombre de réseaux d'utilisateur (902a,902b...902n) peuvent potentiellement utiliser la ressource d'accès afin d'établir une connexion avec un réseau d'accès ;
obtenir une information indiquant une disponibilité de la ressource d'accès ; et
limiter un nombre de réseaux d'utilisateur (902a,902b...902n) qui peuvent potentiellement accéder à la ressource d'accès en vue de l'information de disponibilité obtenue.

**11.** Entité de gestion de ressources multiples (924,924') selon la revendication 10, dans laquelle ladite information concernant la ressource d'accès potentiellement requise inclut une information de ce que la ressource d'accès et/ou un flux d'accès afférent fait partie d'un ensemble validé ou d'un ensemble candidat dans chacun des réseaux d'utilisateur (902a, 902b...902n) .

**12.** Entité de gestion de ressources multiples (924,924') selon la revendication 10, dans lequel ladite unité de traitement (PU11,PU31) est adaptée afin d'exécuter les étapes du procédé selon une quelconque des revendications 3 à 7.

**13.** Procédé pour optimiser l'accès dans un environnement de réseau à accès multiples, dans lequel une entité de gestion de ressources d'accès (911a, 911b...911n, 911b') gérant l'accès à au moins une ressource d'accès exécute les étapes suivantes :

obtenir une information provenant d'une entité de gestion de ressources multiples (924,924') où ladite information est afférente à une ressource d'accès potentiellement requise qui peut être utilisée par un ou plusieurs réseaux d'utilisateur (902a,902b...902n) ;
vérifier la disponibilité de la ressource d'accès potentiellement requise ; et
renvoyer un rapport contenant une information de disponibilité à l'entité de gestion de ressources multiples (924, 924').

**14.** Procédé selon la revendication 13, comprenant en outre l'étape de pré-réservation des ressources associées à la ressource d'accès potentiellement requise, l'information de disponibilité comprenant une information concernant les ressources pré-réservées et une information concernant la fraction des réseaux d'utilisateur (902a,902b...902n) qui doivent être rejetés.

**15.** Procédé selon la revendication 13, dans lequel ladite information obtenue inclut une demande de réservation indiquant au moins une quantité requise de la ressource d'accès.

**16.** Procédé selon la revendication 13, dans lequel si ladite information obtenue inclut une indication d'un nombre de réseaux d'utilisateur (902a,902b...902n) qui peuvent éventuellement utiliser la ressource d'accès, alors ladite entité de gestion de ressource d'accès (911a,911b...911n,911b') avant d'exécuter l'étape de vérification et l'étape d'envoi exécute une étape pour déterminer combien de ressources sont escomptées être utilisées par les réseaux d'utilisateur (902a, 902b...902n) .

**17.** Produit de programme informatique comprenant du code logiciel chargeable dans une unité de traitement (PU21) d'une entité de gestion de ressources d'accès (911a, 911b...911n, 911b) adaptée afin d'exécuter toutes les étapes d'un procédé selon une quelconque des revendications 13 à 16.

**18.** Entité de gestion de ressource d'accès (911a, 911b ... 911n, 911b") comprenant:

une unité de traitement (PU21) ; et
une unité de mémorisation (SU21), où ladite unité de traitement (PU21) obtient des instructions de ladite unité de mémorisation (SU21) et traite ces instructions pour permettre ce qui suit :

obtenir une information d'une entité de gestion de ressources multiples (924,924') où ladite information est relative à une ressource d'accès potentiellement requise qui peut être utilisée par un ou plusieurs réseaux (902a, 902b...902n) ;
vérifier la disponibilité de la ressource d'accès potentiellement requise ; et
renvoyer un rapport contenant une information de disponibilité à l'entité de gestion de ressources multiples (924, 924').

**19.** Entité de gestion de ressources d'accès (911a,911b...911n,911b') selon la revendication 18, dans lequel ladite unité de traitement (PU21) permet en outre une pré-réservation de ressources associées à la ressource d'accès potentiellement requise avec l'information de disponibilité comprenant l'information concernant les ressources pré-réservées et une information concernant la fraction des réseaux d'utilisateur (902a,902b...902n) qui doivent être rejetés.

**20.** Entité de gestion de ressources d'accès (911a,911b...911n,911b') selon la revendication 18, dans lequel ladite unité de traitement (PU21) avant de permettre l'opération de vérification et l'opération d'envoi permet une détermination de combien de ressources sont escomptées être utilisées par les réseaux d'utilisateur (902a, 902b...902n).

FIG. 1

| 214 | 208 | 114 | 116 |
|---|---|---|---|
| BEARER MGMT. FUNCTIONS | POLICY FUNCTIONS | MRRM | GLL |

ACCESS DETECTION

204

ACCESS DISCOVERY AND MONIORING

202a

DETECTED SET (DS)

209a
POLICY CONSTRAINTS

ACCESS CONTROL

206

VALIDATED SET (VS)

212
DATA BEARER/ REQUEST

ACCESS CONTROL

210

CANDIDATE SET (CS)

209b
POLICY CONSTRAINTS
209c

202b
ACCESS PERFORMANCE AND CHARACTERISTICS
202c

ACCESS SELECTION

216

ACTIVE SET (AS)

FIG. 2

FIG. 3

FIG. 4

FIG. 5

FIG. 6

FIG. 7

FIG. 8

FIG. 9

FIG. 10A

14 — REPORT No. OF UNs AND BEARER REQUIREMENTS

13 — IF NUMBER OF UNs LARGER THAN THRESHOLD

15 —
- DETERMINE THE REQ. RESOURCES AND THE PROBABILITY THAT THESE RESOURCES ARE USED. FROM THAT DETERMINE HOW MUCH RESOURCES SHOULD BE RESERVED
- CHECK AVAILABLE RESOURCES
- PRE-RESERVE RESOURCES
- DETERMINE RATIO OF REJECTION

16 — REPORT RESULT

17 — DETERMINE IF AND TO WHAT EXTENT AR2 HAS TO BE BLOCKED (REJECTED). UPDATE VS AND/OR CSs ACCORDINGLY

18 — CONFIRM AND/OR REMOVE AR2 FOR VS, CSs

1000a

19 — UPDATE VS AND CSs

DETERMINE ASs AR2 SELECTED

ACCESS SELECTION SIGNALLING

DETERMINE ASs AR2 SELECTED

21 — ATTACH AR2    20 ⤴    22 — AR ATTACHMENT AND ACCESS FLOW SETUP

23 — AR2 ATTACHED

ACCESS SELECTION SIGNALLING

HANDOVER EXECUTION

24 ⤴

HANDOVER EXECUTION

FIG. 10A  (CONT.)

**FIG. 10B**

13 — IF NUMBER OF UNs LARGER THAN THRESHOLD
- DETERMINE THE REQUIRED AMOUNT OF RESOURCES AND THE PROBABILITY THAT THESE RESOURCES ARE EXPECTED TO BE USED. FROM THAT DETERMINE HOW MUCH RESOURCES SHOULD BE RESERVED

14 — REQUEST FOR RESERVATION OF RESOURCES

15 —
- CHECK AVAILABLE RESOURCES
- PRE-RESERVE RESOURCES
- DETERMINE RATIO OF REJECTION

1000b

16 — REPORT RESULT

17
DETERMINE IF AND TO WHAT EXTENT AR2 HAS TO BE BLOCKED (REJECTED). UPDATE VS AND/OR CSs ACCORDINGLY

18
CONFIRM AND/OR REJECT AR2 FOR VS, CSs

19 —
UPDATE VS AND CSs

DETERMINE ASs AR2 SELECTED

ACCESS SELECTION SIGNALLING

20 —

DETERMINE ASs AR2 SELECTED

21
ATTACH AR2

22
AR ATTACHMENT AND ACCESS FLOW SETUP

23
AR2 ATTACHED

HANDOVER EXECUTION

ACCESS SELECTION SIGNALLING

24 —

HANDOVER EXECUTION

FIG. 10B (CONT.)

**FIG. 11A**

**FIG. 11B**

**FIG. 11C**

① NUMBER OF USER TERMINALS/SESSIONS
HAVING THIS AR IN CS OR VS (N,n,M,m)

MRM
(PER AR)    RU12                          —924'

③ THRESHOLD THRESH ▸    RU11—PU11—RU13    ◂ ② WEIGHTS W1, W2, W3, W4

TU11    SU11

④ REQUEST FOR RESOURCE RESERVATION R

## FIG. 12A

⑤ REQUEST FOR RESOURCE RESERVATION R

ARM    RU21                          —911b'

PU21—SU21

TU21    TU22

⑥ RESERVE RESOURCES μ×R          ⑦ REJECT RESOURCES v×R

## FIG. 12B

⑧ REJECT RESOURCES v×R FOR AR

MRM
(PER AR)    RU31                          —924'

PU31—SU31

TU31

⑨ LIMIT USER NETWORKS NOT TO HAVE ACCESS
ELEMENTS BASED ON AR IN THE CS OR VS

## FIG. 12C

34

**EP 2 092 696 B1**

**REFERENCES CITED IN THE DESCRIPTION**

**Patent documents cited in the description**

- EP 2006068529 W